# EUROPEAN PATENT SPECIFICATION

(11) **EP 3 202 605 B1**
(45) Date of publication and mention of the grant of the patent: **19.06.2019**
(21) Application number: 16834077.6
(22) Date of filing: 07.12.2016
(51) Int. Cl.: B60J 7/057

(54) **CAR ROOF WINDOW CONTROL METHOD AND SYSTEM**
AUTODACHFENSTERSTEUERUNGSVERFAHREN UND -SYSTEM
SYSTÈME ET PROCÉDÉ DE COMMANDE DE FENÊTRE DE TOIT DE VOITURE

(30) Priority: 09.12.2015 CN 201510906784
(43) Date of publication of application: 09.08.2017
(73) Proprietor: Ningbo Shuaitelong Group Co., Ltd., Yinzhou District Ningbo Zhejiang 315157 (CN)
(72) Inventor: WU, Zhiguang, Ningbo Zhejiang 315157 (CN); CHEN, Pengzhan, Ningbo Zhejiang Province 315157 (CN); DAI, Huatong, Ningbo Zhejiang 315157 (CN); XIONG, Ruibin, Ningbo Zhejiang 315157 (CN); YAN, Meibo, Ningbo Zhejiang 315157 (CN); LU, Juan, Ningbo Zhejiang 315157 (CN)
(74) Representative: Loo, Chi Ching
(86) International application number: PCT/CN2016/108951
(87) International publication number: WO 2017/097212

(56) References cited:
- CN-U- 204 605 444
- DE-A1- 19 704 857
- US-A- 6 064 165
- US-A1- 2002 143 452
- US-A1- 2011 190 962

## Description

### BACKGROUND OF THE INVENTION

### Technical Field

The present invention relates to the field of automatic control, and in particular to a vehicle sunroof controlling method and system.

### Description of Related Art

At present, most vehicles are provided with sunroofs at roofs, the vehicle sunroof may directly change the effect on the environment inside the vehicle exerted by the environment outside the vehicle, and in particular the effect on the temperature inside the vehicle by the temperature outside the vehicle, the effect on the air inside the vehicle by the air outside the vehicle, the effect on the illuminance inside the vehicle by the illuminance outside the vehicle, and the like. To guarantee a good driving experience in the vehicle, a person in the vehicle may frequently regulate the opening degree of the sunroof. However, it is difficult to precisely regulate the opening degree of the current sunroof, and in case of only depending on the manual operation of the driver or passenger to open and close the sunroof, the driver or passenger may be easily distracted, which causes a certain potential safety hazard. US2002/143452A1 discloses an automated closure system and method for a vehicle window and CN204605444 discloses ventilation control system for a vehicle.

### BRIEF SUMMARY OF THE INVENTION

The present invention is intended to solve a technical problem by providing a vehicle sunroof controlling method and system, which enables the automatic precise control of the sunroof opening degree, and prevents the driver or passenger from being distracted due to manual operation of the sunroof, thereby promoting driving safety and guaranteeing a degree of comfort in the vehicle.

A technical solution of the present invention is to provide a vehicle sunroof controlling method, comprising the following steps:
acquiring an environment parameter inside and outside a vehicle;
establishing a corresponding environment parameter and sunroof opening degree model according to a sunroof opening degree record where a driver or passenger manually operates a vehicle sunroof and a current environment parameter record;
inputting the acquired environment parameter into the corresponding environment parameter and sunroof opening degree model for predicting a sunroof opening degree; and
controlling the sunroof opening degree of the vehicle according to a prediction result;
characterized in that the step of establishing the corresponding environment parameter and sunroof opening degree model according to the sunroof opening degree record where the driver or passenger manually operates a vehicle sunroof to open and the current environment parameter record is implemented through the following steps:
detecting a manual operation signal for the vehicle sunroof;
recording a current environment parameter and the sunroof opening degree after detecting that the manual operation signal for the vehicle sunroof exceeds a preset time; and
establishing the corresponding environment parameter and sunroof opening degree model by taking the current environment parameter record and the sunroof opening degree record as sample data.

As an implementable means, the vehicle sunroof controlling method of the present invention may further comprise the following steps:
arranging the sample data in a time sequence and dividing the sample data into n groups, substituting each group of sample data into the corresponding environment parameter and sunroof opening degree model in sequence for calculation to obtain a corresponding sunroof opening degree, wherein n is a positive integer; and
eliminating a group with the highest deviation value of the sunroof opening degree and recording new sample data.

As an implementable means, the sample data may be subjected to a least squares support vector operation in the present invention to obtain the corresponding environment parameter and sunroof opening degree model; and
the sample data includes an input value and an output value within a preset threshold, the input value is the environment parameter, and the output value is the sunroof opening degree.

As an implementable means, the step of controlling the sunroof opening degree of the vehicle according to the prediction result may comprise the following steps:
inputting the current environment parameter into the corresponding environment parameter and sunroof opening degree model to acquire the sunroof opening degree corresponding to the current environment parameter, and taking the sunroof opening degree as the predicted sunroof opening degree; and
controlling the sunroof opening degree of the vehicle to reach the predicted sunroof opening degree.

As an implementable means, the step of controlling the sunroof opening degree of the vehicle according to the prediction result may comprise the following steps:
inputting the current environment parameter into the corresponding environment parameter and sunroof opening degree model to acquire the sunroof opening degree corresponding to the current environment parameter, and taking the sunroof opening degree as the predicted sunroof opening degree; and
acquiring the current actual sunroof opening degree of the vehicle, and controlling the sunroof opening degree of the vehicle to reach the predicted sunroof opening degree when the difference value between the actual sunroof opening degree and the obtained predicted sunroof opening degree is more than a preset value.

As an implementable means, the environment parameter may comprise one or more of an illuminance sensor signal parameter, a temperature sensor signal parameter, a humidity sensor signal parameter, and a PM2.5 sensor signal parameter, inside and outside the vehicle.

Correspondingly, the present invention further provides a vehicle sunroof controlling system to implement the vehicle sunroof controlling method in accordance with the above, comprising an acquisition module, a prediction module and a control module; wherein
the acquisition module is used for acquiring an environment parameter inside and outside a vehicle and sending the environment parameter to the control module;
the prediction module is used for inputting the environment parameter acquired by the acquisition module into a corresponding environment parameter and sunroof opening degree model for predicting a sunroof opening degree; and
the control module is used for controlling the sunroof opening degree of the vehicle according to a prediction result of the prediction module.

Correspondingly, a vehicle sunroof controlling system, not in accordance with the present invention, comprising a controller and a sensor group connected with the controller; wherein
the sensor group is used for acquiring an environment parameter inside and outside a vehicle, and sending the environment parameter to the controller; and
the controller is used for inputting the acquired environment parameter into a preset corresponding environment parameter and sunroof opening degree model for predicting a sunroof opening degree, and controlling the sunroof opening degree of the vehicle according to a prediction result.

As an implementable means, the sensor group may comprise one or more of an illuminance sensor, a temperature sensor, a humidity sensor, and a PM2.5 sensor signal.

As an implementable means, at least two sensor groups may be provided, with one disposed outside the vehicle, and the other disposed inside the vehicle.

The present invention has the following advantageous effects:
with the vehicle sunroof controlling method and system provided by the present invention, the sunroof opening degree of the vehicle is controlled by acquiring the environment parameter inside and outside the vehicle, inputting the acquired environment parameter into the corresponding environment parameter and sunroof opening degree model for predicting the sunroof opening degree of the vehicle, and finally controlling the sunroof opening degree of the vehicle according to the prediction result, which enables the automatic precise regulation of the vehicle sunroof and prevents the driver or passenger from being distracted due to manual regulation of the sunroof opening degree, thereby increasing the driving safety. The corresponding environment parameter and sunroof opening degree model can be disposed in advance according to the using habit of the driver or passenger. Therefore, a better degree of comfort can be maintained inside the vehicle with the vehicle sunroof controlling method and system provided by the present invention for regulating the vehicle sunroof.

### BRIEF DESCRIPTION OF THE SEVERAL VIEWS OF THE DRAWINGS

FIG. 1 is a schematic diagram of the process flow of the vehicle sunroof controlling method in accordance with the present invention;
FIG. 2 is a schematic diagram of the structure of a first embodiment of the vehicle sunroof controlling system to implement the vehicle sunroof controlling method in accordance with the present invention; and
FIG. 3 is a schematic diagram of the structure of a second embodiment of the vehicle sunroof controlling system to implement the vehicle sunroof controlling method in accordance with the present invention.

### DETAILED DESCRIPTION OF THE INVENTION

The present invention will be further illustrated below in combination with particular embodiments.

The present invention provides a vehicle sunroof controlling method and system, which enables the automatic precise control of the opening and closing of a vehicle sunroof and prevents the driver from being distracted due to the opening and closing of the sunroof, thereby increasing the driving safety and the degree of comfort inside the vehicle.

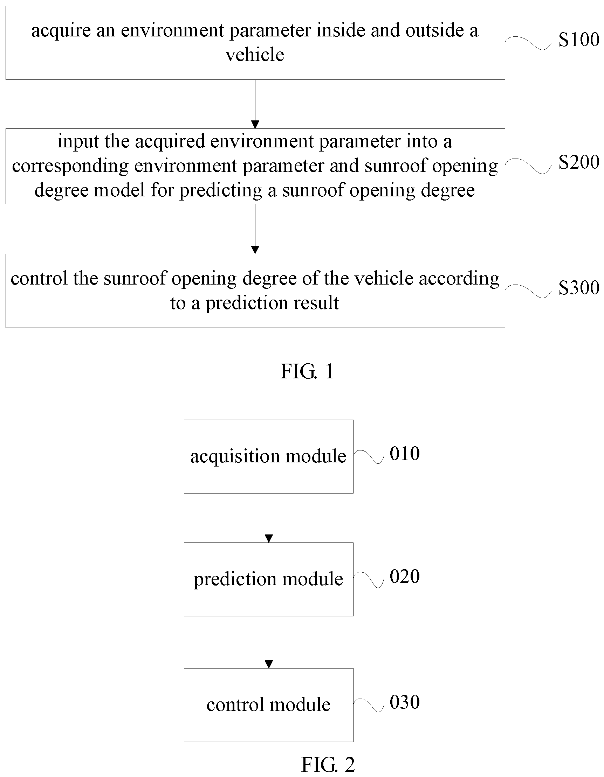

With reference to FIG. 1, in accordance with the present invention there is provided a vehicle sunroof controlling method, comprising the following steps:
S100, acquiring an environment parameter inside and outside a vehicle;
S200, inputting the acquired environment parameter into a corresponding environment parameter and sunroof opening degree model for predicting a sunroof opening degree; and
S300, controlling the sunroof opening degree of the vehicle according to a prediction result.

In the above corresponding environment parameter and sunroof opening degree model, there are provided sunroof opening degrees corresponding to various environmental situations, which may keep a better degree of comfort inside the vehicle, and the sunroof opening degree may also be set according to the using preference of the driver or passenger. By inputting an environment parameter corresponding to a specific moment into the corresponding environment parameter and sunroof opening degree model, the sunroof opening degree at which a better degree of comfort is maintained inside the vehicle at the moment can be obtained.

With the vehicle sunroof controlling method provided by the present embodiment, the automatic precise regulation of the vehicle sunroof is implemented by acquiring the environment parameter inside and outside the vehicle, inputting the acquired environment parameter into the corresponding environment parameter and sunroof opening degree model for prediction, and finally controlling the sunroof opening degree of the vehicle according to the prediction result.

The method not only enables the active acquisition of the environment parameter, but also enables the prediction through the corresponding environment parameter and sunroof opening degree model by using the current environment parameter to obtain the sunroof opening degree at which people in the vehicle feel comfortable, thereby implementing the automatic precise regulation of the vehicle sunroof and preventing the driver or passenger from being distracted due to manual regulation of the sunroof opening degree to increase the driving safety.

The vehicle sunroof controlling method provided by the present invention can be used for regulating the vehicle sunroof in real time, in order to keep a better degree of comfort inside the vehicle all the time.

Correspondingly, the control process described above may be cycled at a fixed time according to the setting by the user to achieve the purpose of automatically controlling the vehicle sunroof at the fixed time. For a user group having a low requirement on the degree of comfort inside the vehicle, or in case of a relatively stable driving environment, a fixed time control mode may be used. That is, after the previous cycle ends at Step S300, the next control cycle starts by executing Step S100 at a preset time interval. This reduces power consumption and is more energy saving while the automatic regulation is implemented.

In the above embodiment, the driver may set the preset corresponding environment parameter and sunroof opening degree model according to a control parameter of the vehicle per se and in combination with a personal preference. Please refer to the below for a specific implement process in accordance with the present invention.

The vehicle sunroof controlling method in accordance with the present invention further includes Step S110 before Step S200 in the above Embodiment One:

S110, establishing the corresponding environment parameter and sunroof opening degree model according to a sunroof opening degree record where the driver or passenger manually operates the vehicle sunroof and a current environment parameter record. That is, sample data in the particular corresponding environment parameter and sunroof opening degree model are taken from the manual operation records of the driver or passenger, which enables more precise prediction of the model and is in line with the using habit of the driver or passenger.

Specifically, Step S110 is implemented through the following steps:
Sill, detecting a manual operation signal for the vehicle sunroof;
S112, recording the current environment parameter and the sunroof opening degree after detecting that the manual operation signal for the vehicle sunroof exceeds a preset time; and
S113, establishing the corresponding environment parameter and sunroof opening degree model by taking the current environment parameter record(s) and the sunroof opening degree record(s) as sample data.

The process above may be completed depending on the controller of the vehicle per se. For example, the controller receives a manual sunroof operation signal and triggers a timer after the vehicle sunroof is manually operated, and after the time exceeds a preset time, the controller records the current environment parameter and detects the current sunroof opening degree corresponding to the record; and the controller establishes the corresponding environment parameter and sunroof opening degree model by taking the current environment parameter and sunroof opening degree records as sample data.

In the present embodiment, a learning process is set for the driver or passenger to select. Through precise learning, the sample data with the personal preferences of the driver or passenger are recorded, the corresponding environment parameter and sunroof opening degree model can be established precisely to allow the prediction result to better meet the using habit of the driver or passenger.

Further, as an implementable means, the process of recording the sample data of the corresponding environment parameter and sunroof opening degree model may further include the following steps:
S010, arranging the sample data in a time sequence and dividing the sample data into n groups, substituting each group of sample data into the corresponding environment parameter and sunroof opening degree model in sequence for calculation to obtain a corresponding sunroof opening degree; and
S020, eliminating the group with the highest deviation value of the sunroof opening degree and recording new sample data.

The sample data can be divided into n groups (n is a positive integer) in a time sequence, each group of sample data is substituted into the corresponding environment parameter and sunroof opening degree model in turn (the substituted sample data can be excluded outside a sample library at this time so as to increase the accuracy) to obtain the sunroof opening degree calculated, a difference value is obtained by comparing the calculated sunroof opening degree and the sunroof opening degree in the sample data, and the group of the maximal difference value is set to be the group with the maximum deviation value in the sunroof opening degree and then eliminated. As such, the group of sample with the maximum deviation can be found out more accurately, the operation burden can be reduced, the group of samples with the maximum deviation can be eliminated rapidly and accurately, so that the model can learn continuously and make corrections constantly to adapt to a variety of environments and achieve better accuracy, thereby guaranteeing a better using experience for the driver or passenger.

The corresponding environment parameter and sunroof opening degree model in the present embodiment is obtained by subjecting the sample data to the least squares support vector operation, where the sample data includes input and output values within preset thresholds, the input value is the environment parameter and the output value is the sunroof opening degree. With the least squares support vector, learning data is transformed into the accurate model to enable the vehicle sunroof to open and close automatically.

Further, as an implementable means, Step S300 may include the following steps:
S310, inputting the current environment parameter into the corresponding environment parameter and sunroof opening degree model to acquire the sunroof opening degree corresponding to the current environment parameter, and taking the sunroof opening degree as the predicted sunroof opening degree; and
S320, controlling the sunroof opening degree of the vehicle to reach the predicted sunroof opening degree.

Since the corresponding environment parameter and sunroof opening degree model is provided with sunroof opening degrees corresponding to various environment situations, which may keep a better degree of comfort in the vehicle, the sunroof opening degree at which a better degree of comfort is maintained in the vehicle under the current environment parameter can be obtained by inputting the current environment parameter into the corresponding environment parameter and sunroof opening degree model, thereby controlling the sunroof opening degree of the vehicle to reach the predicted sunroof opening degree to implement the automatic regulation of the sunroof opening degree.

As another implementable means, Step S300 may include the following steps:
S310, inputting the current environment parameter into the corresponding environment parameter and sunroof opening degree model to acquire the sunroof opening degree corresponding to the current environment parameter, and taking the sunroof opening degree as the predicted sunroof opening degree; and
S321, acquiring the current actual sunroof opening degree of the vehicle, and controlling the sunroof opening degree of the vehicle to reach the predicted sunroof opening degree when a difference value between the actual sunroof opening degree and the obtained predicted sunroof opening degree is more than a preset value.

After the predicated sunroof opening degree is obtained, if a difference value between the current actual sunroof opening degree of the vehicle and the predicted sunroof opening degree is very small, it indicates that the regulation has a little effect, there is no need to control the sunroof opening degree of the vehicle to reach the predicated sunroof opening degree, and the original sunroof opening degree may be maintained. If a difference value between the actual sunroof opening degree and the obtained predicted sunroof opening degree is more than a preset value, regulation is performed to control the sunroof opening degree of the vehicle to reach the predicted sunroof opening degree. Particularly for a vehicle system regulated and controlled in real time, the uninterrupted operation of the vehicle sunroof and motor can be prevented effectively by presetting a preset value with the present embodiment, thereby reducing the power consumption and guaranteeing the service life of each component.

The environment parameter may include one or more of an illuminance sensor signal parameter, a temperature sensor signal parameter, a humidity sensor signal parameter, and a PM2.5 sensor signal parameter, inside and outside the vehicle. A user may set the specific type of an environment detection signal according to personal needs, for example, the model can be established according to the intra-/extra-vehicular illuminance sensor signal parameters and the sunroof opening degree only, and in this way, the sunroof opening degree of the vehicle is only related to the intra-/extra-vehicular illuminance. The model can also be established according to the intra-/extra-vehicular illuminance sensor signal parameters, the intra-/extra-vehicular temperature sensor signal parameters, the intra-/extra-vehicular humidity sensor signal parameters, and the intra-/extra-vehicular PM2.5 sensor signal parameters at the same time, and multiple groups of data is unified for modeling to further guarantee the degree of comfort in the vehicle.

Based on the same inventive concept, a first embodiment of a vehicle sunroof controlling system may be provided, which can be implemented with reference to the method described above, and the detailed description thereof will be omitted here.

With reference to FIG. 2, a first embodiment of a vehicle sunroof controlling system may be provided, comprising an acquisition module 010, a prediction module 020 and a control module 030. The acquisition module 010 is used for acquiring an environment parameter inside and outside a vehicle, and sending the environment parameter to the control module; the prediction module 020 is used for inputting the environment parameter acquired by the acquisition module into a corresponding environment parameter and sunroof opening degree model for predicting the sunroof opening degree; and the control module 030 is used for controlling the sunroof opening degree of the vehicle according to the prediction result of the prediction module.

Accordingly, the present invention also provides a vehicle sunroof controlling system, comprising a controller and a sensor group connected with the controller. The controller is used for acquiring the environment parameter inside and outside a vehicle and sending the environment parameter to the controller; and the controller is used for inputting the acquired environment parameter into a preset corresponding environment parameter and sunroof opening degree model for predicting the sunroof opening degree, and controlling the vehicle sunroof by controlling a sunroof motor of the vehicle according to the prediction result.

The sensor group includes one or more of an illuminance sensor, a temperature sensor, a humidity sensor, and a PM2.5 sensor signal. At least two sensor groups are provided, with one disposed outside the vehicle, and the other disposed inside the vehicle.

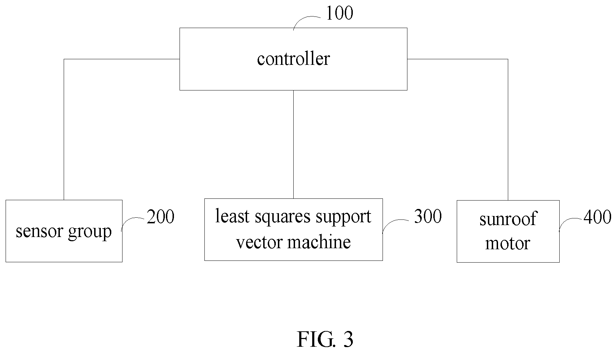

As shown in FIG. 3, a second embodiment of the vehicle sunroof controlling system may be provided to implement the vehicle sunroof controlling method in accordance with the present invention, which includes a controller 100, a sensor group 200, a least squares support vector machine 300 and a sunroof motor 400, wherein the sensor group 200, the least squares support vector machine 300 and the sunroof motor 400 are connected with the controller 100 respectively; the sensor group 200 includes one or more of an illuminance sensor, a temperature sensor, a humidity sensor, and a PM2.5 sensor; the controller 100, the sensor group 200 and the least squares support vector machine 300 learn and establish a corresponding environment parameter and sunroof opening degree model, the sensor group 200 is then used to monitor an environment parameter in real time and feeds the environment parameter back to the environment parameter and sunroof opening degree corresponding module to obtain a predicted sunroof opening degree, and the sunroof motor 400 is used to control the vehicle sunroof opening degree to reach the predicted sunroof opening degree to implement the automatic opening of the vehicle sunroof, thereby facilitating a user and preventing potential safety hazards.

## Claims

1. A vehicle sunroof controlling method, comprising the following steps:
acquiring an environment parameter inside and outside a vehicle (S100);
establishing a corresponding environment parameter and sunroof opening degree model according to a sunroof opening degree record where a driver or passenger manually operates a vehicle sunroof and a current environment parameter record (S110);
inputting the acquired environment parameter into the corresponding environment parameter and sunroof opening degree model for predicting a sunroof opening degree (S200); and
controlling the sunroof opening degree of the vehicle according to a prediction result (S300);
**characterized by** the following steps:
detecting a manual operation signal for the vehicle sunroof;
recording a current environment parameter and a sunroof opening degree after detecting that the manual operation signal for the vehicle sunroof exceeds a preset time; and
establishing the corresponding environment parameter and sunroof opening degree model by taking the current environment parameter record and the sunroof opening degree record as sample data.

2. The vehicle sunroof controlling method according to claim 1, **characterized by** further comprising the following steps:
arranging the sample data in a time sequence and dividing the sample data into n groups, substituting each group of sample data into the corresponding environment parameter and sunroof opening degree model in sequence for calculation to obtain a corresponding sunroof opening degree, wherein n is a positive integer; and
eliminating a group with the highest deviation value of the sunroof opening degree and recording new sample data.

3. The vehicle sunroof controlling method according to claim 1, **characterized in that** the sample data is subjected to a least squares support vector operation to obtain the corresponding environment parameter and sunroof opening degree model; and
the sample data includes an input value and an output value within a preset threshold, the input value is the environment parameter, and the output value is the sunroof opening degree.

4. The vehicle sunroof controlling method according to any one of claims 1 to 3, **characterized in that** the step of controlling the sunroof opening degree of the vehicle according to the prediction result (S300) comprises the following steps:
inputting the current environment parameter into the corresponding environment parameter and sunroof opening degree model to acquire the sunroof opening degree corresponding to the current environment parameter, and taking the sunroof opening degree as the predicted sunroof opening degree; and
controlling the sunroof opening degree of the vehicle to reach the predicted sunroof opening degree.

5. The vehicle sunroof controlling method according to any one of claims 1 to 3, **characterized in that** the step of controlling the sunroof opening degree of the vehicle according to the prediction result (S300) comprises the following steps:
inputting the current environment parameter into the corresponding environment parameter and sunroof opening degree model to acquire the sunroof opening degree corresponding to the current environment parameter, and taking the sunroof opening degree as the predicted sunroof opening degree; and
acquiring the current actual sunroof opening degree of the vehicle, and controlling the sunroof opening degree of the vehicle to reach the predicted sunroof opening degree when a difference value between the actual sunroof opening degree and the obtained predicted sunroof opening degree is more than a preset value.

6. The vehicle sunroof controlling method according to any one of claims 1 to 5, **characterized in that** the environment parameter comprises one or more of an illuminance sensor signal parameter, a temperature sensor signal parameter, a humidity sensor signal parameter, and a PM2.5 sensor signal parameter, inside and outside the vehicle.

7. A vehicle sunroof controlling system to implement the vehicle sunroof controlling method as claimed in any one of the preceding claims, **characterized by** comprising an acquisition module (010), a prediction module (020), and a control module (030); wherein
the acquisition module (010) is acquiring an environment parameter inside and outside a vehicle and sending the environment parameter to the control module; the prediction module (020) is inputting the environment parameter acquired by the acquisition module (010) into a corresponding environment parameter and sunroof opening degree model for predicting a sunroof opening degree; and
the control module (030) is controlling the sunroof opening degree of the vehicle according to a prediction result of the prediction module (020).

## Patentansprüche

1. Fahrzeugschiebedachsteuerverfahren, die folgenden Schritte umfassend:
Erfassen eines Umgebungsparameters innerhalb und außerhalb eines Fahrzeugs (S100);
Erstellen eines entsprechenden Umgebungsparameter-Schiebedachöffnungsgrad-Modells gemäß einem Schiebedachöffnungsgraddatensatz, wenn ein Fahrer oder Passagier manuell ein Fahrzeugschiebedach betätigt, und einem aktuellen Umgebungsparameterdatensatz (S110);
Eingeben des erfassten Umgebungsparameters in das entsprechende Umgebungsparameter-Schiebedachöffnungsgrad-Modell zum Vorhersagen eines Schiebedachöffnungsgrads (S200); und
Steuern des Schiebedachöffnungsgrads des Fahrzeugs gemäß einem Vorhersageergebnis (S300);
durch die folgenden Schritte gekennzeichnet:
Erfassen eines Signals einer manuellen Bedienung des Fahrzeugschiebedachs; Aufzeichnen eines aktuellen Umgebungsparameters und eines Schiebedachöffnungsgrads, nachdem ermittelt wurde, dass das Signal der manuellen Bedienung des Fahrzeugschiebedachs eine voreingestellte Zeit überschreitet; und
Erstellen des entsprechenden Umgebungsparameter-Schiebedachöffnungsgrad-Modells, indem der aktuelle Umgebungsparameterdatensatz und der Schiebedachöffnungsgraddatensatz als Probedaten verwendet werden.

2. Fahrzeugschiebedachsteuerverfahren nach Anspruch 1, **dadurch gekennzeichnet, dass** es ferner die folgenden Schritte umfasst:
Anordnen der Probedaten in einer zeitlichen Abfolge und Unterteilen der Probedaten in n Gruppen, zur Berechnung Einsetzen der einzelnen Gruppen der Probedaten in das entsprechende Umgebungsparameter-Schiebedachöffnungsgrad-Modell gemäß der Abfolge, um einen entsprechenden Schiebedachöffnungsgrad zu erhalten, wobei n eine positive ganze Zahl ist; und
Entfernen einer Gruppe mit dem höchsten Abweichungswert des Schiebedachöffnungsgrads und Aufzeichnen neuer Probedaten.

3. Fahrzeugschiebedachsteuerverfahren nach Anspruch 1, **dadurch gekennzeichnet, dass** die Probedaten einer Support-Vector-Operation kleinster Quadrate unterzogen werden, um das entsprechende Umgebungsparameter-Schiebedachöffnungsgrad-Modell zu erhalten; und
die Probedaten innerhalb eines voreingestellten Schwellwerts einen Eingabewert und einen Ausgabewert beinhalten, wobei der Eingabewert der Umgebungsparameter und der Ausgabewert der Schiebedachöffnungsgrad ist.

4. Fahrzeugschiebedachsteuerverfahren nach einem der Ansprüche 1 bis 3, **dadurch gekennzeichnet, dass** der Schritt des Steuerns des Schiebedachöffnungsgrads des Fahrzeugs gemäß dem Vorhersageergebnis (S300) die folgenden Schritte umfasst:
Eingeben des aktuellen Umgebungsparameters in das entsprechende Umgebungsparameter-Schiebedachöffnungsgrad-Modell, um den dem aktuellen Umgebungsparameter entsprechenden Schiebedachöffnungsgrad zu erfassen, und Verwenden des Schiebedachöffnungsgrads als den vorhergesagten Schiebedachöffnungsgrad; und
Steuern des Schiebedachöffnungsgrads des Fahrzeugs, um den vorhergesagten Schiebedachöffnungsgrad zu erreichen.

5. Fahrzeugschiebedachsteuerverfahren nach einem der Ansprüche 1 bis 3, **dadurch gekennzeichnet, dass** der Schritt des Steuerns des Schiebedachöffnungsgrads des Fahrzeugs gemäß dem Vorhersageergebnis (S300) die folgenden Schritte umfasst:
Eingeben des aktuellen Umgebungsparameters in das entsprechende Umgebungsparameter-Schiebedachöffnungsgrad-Modell, um den dem aktuellen Umgebungsparameter entsprechenden Schiebedachöffnungsgrad zu erfassen, und Verwenden des Schiebedachöffnungsgrads als den vorhergesagten Schiebedachöffnungsgrad; und
Erfassen des aktuellen tatsächlichen Schiebedachöffnungsgrads des Fahrzeugs und Steuern des Schiebedachöffnungsgrads des Fahrzeugs, um den vorhergesagten Schiebedachöffnungsgrad zu erreichen, wenn ein Differenzwert zwischen dem tatsächlichen Schiebedachöffnungsgrad und dem erhaltenen vorhergesagten Schiebedachöffnungsgrad größer als ein voreingestellter Wert ist.

6. Fahrzeugschiebedachsteuerverfahren nach einem der Ansprüche 1 bis 5, **dadurch gekennzeichnet, dass** der Umgebungsparameter einen oder mehr Parameter aus der Gruppe bestehend aus Beleuchtungssensorsignalparameter, Temperatursensorsignalparameter, Feuchtigkeitssensorsignalparameter und PM2,5-Sensorsignalparameter innerhalb und außerhalb des Fahrzeugs umfasst.

7. Fahrzeugschiebedachsteuersystem zum Implementieren des Fahrzeugschiebedachsteuerverfahrens nach einem der vorhergehenden Ansprüche, **gekennzeichnet dadurch, dass** es ein Erfassungsmodul (010), ein Vorhersagemodul (020) und ein Steuermodul (030) umfasst; wobei
das Erfassungsmodul (010) einen Umgebungsparameter innerhalb und außerhalb eines Fahrzeugs erfasst und den Umgebungsparameter an das Steuermodul sendet;
das Vorhersagemodul (020) den von dem Erfassungsmodul (010) erfassten Umgebungsparameter zum Vorhersagen eines Schiebedachöffnungsgrads in ein entsprechendes Umgebungsparameter-Schiebedachöffnungsgrad-Modell eingibt; und das Steuermodul (030) den Schiebedachöffnungsgrad des Fahrzeugs gemäß einem Vorhersageergebnis des Vorhersagemoduls (020) steuert.

## Revendications

1. Procédé de commande de toit ouvrant de véhicule, comprenant les étapes suivantes :
l'acquisition d'un paramètre d'environnement à l'intérieur et à l'extérieur d'un véhicule (S100) ;
l'établissement d'un modèle de paramètre d'ouverture et de degré d'ouverture du toit ouvrant correspondant selon un enregistrement de degré d'ouverture du toit ouvrant où un conducteur ou un passager commande manuellement un toit ouvrant de véhicule et un enregistrement de paramètre d'environnement actuel (S110) ;
l'entrée du paramètre d'environnement acquis dans le modèle de paramètre d'environnement et le degré d'ouverture du toit ouvrant correspondants pour prédire un degré d'ouverture du toit ouvrant (S200) ; et
la commande du degré d'ouverture du toit ouvrant de véhicule en fonction d'un résultat de prédiction (S300) ;
**caractérisé par** les étapes suivantes :
la détection d'un signal d'actionnement manuel pour le toit ouvrant de véhicule ;
l'enregistrement d'un paramètre d'environnement actuel et d'un degré d'ouverture du toit ouvrant après avoir détecté que le signal d'actionnement manuel du toit ouvrant de véhicule dépasse une durée prédéfinie ; et
l'établissement du modèle de paramètre d'environnement et du degré d'ouverture du toit ouvrant correspondants en prenant l'enregistrement de paramètre d'environnement actuel et l'enregistrement du degré d'ouverture du toit ouvrant comme données d'échantillon.

2. Procédé de commande de toit ouvrant de véhicule selon la revendication 1, **caractérisé par**
comprenant en outre les étapes suivantes :
l'organisation des données d'échantillon dans une séquence temporelle et la division des données d'échantillon en n groupes, en substituant chaque groupe de données d'échantillon au paramètre d'environnement et au modèle de degré d'ouverture du toit ouvrant correspondants en séquence pour le calcul afin d'obtenir un degré d'ouverture du toit ouvrant correspondant, dans lequel n est un entier positif ; et
l'élimination d'un groupe présentant la valeur de déviation la plus élevée du degré d'ouverture du toit ouvrant et l'enregistrement de nouvelles données d'échantillon.

3. Procédé de commande de toit ouvrant de véhicule selon la revendication 1, **caractérisé en ce que** les données d'échantillon sont soumises à une opération de vecteur de support de moindres carrés pour obtenir le modèle d'environnement et le modèle de degré d'ouverture du toit ouvrant correspondants ; et
les données d'échantillon comprennent une valeur d'entrée et une valeur de sortie dans un seuil prédéfini, la valeur d'entrée est le paramètre d'environnement et la valeur de sortie est le degré d'ouverture du toit ouvrant.

4. Procédé de commande de toit ouvrant de véhicule selon l'une quelconque des revendications 1 à 3, **caractérisé en ce que** l'étape de commande du degré d'ouverture du toit ouvrant de véhicule en fonction du résultat de prédiction (S300) comprend les étapes suivantes : l'entrée du paramètre d'environnement actuel dans le paramètre d'environnement et le modèle de degré d'ouverture de toit ouvrant correspondants pour acquérir le degré d'ouverture de toit ouvrant correspondant au paramètre d'environnement actuel, et en prenant le degré d'ouverture de toit ouvrant comme degré d'ouverture prévu du toit ouvrant ; et
la commande du degré d'ouverture du toit ouvrant de véhicule pour atteindre le degré d'ouverture prévu du toit ouvrant.

5. Procédé de commande de toit ouvrant de véhicule selon l'une quelconque des revendications 1 à 3, **caractérisé en ce que** l'étape de commande du degré d'ouverture du toit ouvrant de véhicule en fonction du résultat de prédiction (S300) comprend les étapes suivantes : entrée du paramètre d'environnement actuel dans le paramètre d'environnement et le modèle de degré d'ouverture du toit ouvrant correspondants pour acquérir le degré d'ouverture du toit ouvrant correspondant au paramètre d'environnement actuel, et en prenant le degré d'ouverture du toit ouvrant comme degré d'ouverture prévu du toit ouvrant ; et
l'acquisition du degré actuel d'ouverture du toit ouvrant de véhicule et la commande du degré d'ouverture du toit ouvrant de véhicule pour atteindre le degré d'ouverture prévu du toit ouvrant lorsqu'une valeur de différence entre le degré d'ouverture du toit ouvrant réel et celui obtenu est supérieure à une valeur prédéfinie.

6. Procédé de commande de toit ouvrant de véhicule selon l'une quelconque des revendications 1 à 5, **caractérisé en ce que** le paramètre d'environnement comprend un ou plusieurs parmi un paramètre de signal de capteur d'éclairement, un paramètre de signal de capteur de température, un paramètre de signal de capteur d'humidité et un paramètre du signal de capteur PM2.5 à l'intérieur et à l'extérieur du véhicule.

7. Système de commande de toit ouvrant destiné à exécuter le procédé de commande de toit ouvrant selon l'une quelconque des revendications précédentes, **caractérisé en ce qu'**il comprend un module d'acquisition (010), un module de prédiction (020) et un module de commande (030) ;
dans lequel le module d'acquisition (010) acquiert un paramètre d'environnement à l'intérieur et à l'extérieur d'un véhicule et envoie le paramètre d'environnement au module de commande ;
le module de prédiction (020) entre le paramètre d'environnement acquis par le module d'acquisition (010) dans un modèle de paramètre d'environnement et de degré d'ouverture du toit ouvrant correspondant pour prédire un degré d'ouverture du toit ouvrant ; et
le module de commande (030) commande le degré d'ouverture du toit ouvrant de véhicule en fonction d'un résultat de prédiction du module de prédiction (020).
